# EUROPEAN PATENT SPECIFICATION

(11) **EP 3 524 937 B1**
(45) Date of publication and mention of the grant of the patent: **23.06.2021**
(21) Application number: 18206418.8
(22) Date of filing: 15.11.2018
(51) Int. Cl.: G01C 21/36, B60K 35/00

(54) **METHOD OF DISPLAYING NAVIGATION INFORMATION FOR A VEHICLE WITH USE OF A PORTABLE DEVICE, AND A NAVIGATION SYSTEM IMPLEMENTING THE SAME**
VERFAHREN ZUR ANZEIGE VON NAVIGATIONSINFORMATIONEN FÜR EIN FAHRZEUG UNTER VERWENDUNG EINER TRAGBAREN VORRICHTUNG UND NAVIGATIONSSYSTEM
PROCÉDÉ D'AFFICHAGE D'INFORMATIONS DE NAVIGATION POUR UN VÉHICULE AVEC UTILISATION D'UN DISPOSITIF PORTABLE ET SYSTÈME DE NAVIGATION LE METTANT EN OEUVRE

(30) Priority: 09.02.2018 TW 107104613
(43) Date of publication of application: 14.08.2019
(73) Proprietor: Kwang Yang Motor Co., Ltd., Kaohsiung City 80794 (TW)
(72) Inventor: LU, Tai-Ling, 11501 Taipei City (TW); LIN, Chen-Sheng, 80794 Kaohsiung (TW); TSAI, Yi-Yang, 80794 Kaohsiung (TW)
(74) Representative: Mewburn Ellis LLP

(56) References cited:
- EP-A2- 0 771 686
- WO-A1-2017/097150
- DE-A1- 19 516 647
- JP-A- 2001 133 272
- JP-A- 2006 193 044
- JP-A- 2009 281 991
- US-A- 6 163 752
- US-A1- 2008 275 645
- US-A1- 2011 172 917
- US-A1- 2014 015 849

## Description

The disclosure relates to a navigation system, and more particularly to a navigation system that implements a method of displaying navigation information.

For cost reduction, some vehicles (e.g., low end motorcycles and some cars) may have no built-in global positioning system (GPS), so a vehicle driver may use a device holder to mount an external GPS device or a smartphone that has GPS function to the vehicle, for example, at a handle of the motorcycle or in front of the driver.

However, during movement of the vehicle, if the driver operates the external GPS device or if the external GPS device displays navigation information that is too complicated to be read at a glance, the driver may not be able to concentrate on driving, thereby increasing risks of accidents.

Therefore, an object of the disclosure is to provide a method that can alleviate at least one of the drawbacks of the prior art.

JP2009 281991 A discloses a method for displaying information to a driver according to the driving state of the vehicle. The information display can receive navigation information from a mobile phone. The displayed information is changed according to the vehicle state, e.g. in case of high speed driving no information in text form is shown as navigation information (i.e. only map information is shown).

According to an aspect of the disclosure, there is provided a method of displaying navigation information for a vehicle according to claim 1.

Another object of the disclosure is to provide a navigation system that can alleviate at least one of the drawbacks of the prior art.

According to an aspect of the disclosure, there is provided a navigation system according to claim 6.

Other features and advantages of the disclosure will become apparent in the following detailed description of the embodiment (s) with reference to the accompanying drawings, of which:
FIG. 1 is a block diagram illustrating an embodiment of a navigation system according to the disclosure;
FIG. 2 is a schematic diagram illustrating an instrument cluster device of the vehicle, where the instrument cluster device includes a host display and a dashboard;
FIG. 3 is a flow chart illustrating steps of an embodiment of a method of displaying navigation information for a vehicle with use of a portable device according to the disclosure;
FIG. 4 is a schematic diagram exemplarily showing a primary navigation screen in a case that only the primary navigation screen is permitted to be displayed by the host display;
FIG. 5 is a schematic diagram exemplarily showing a primary navigation screen in a case that switching between the primary navigation screen and auxiliary navigation screens is permitted; and
FIGS. 6 to 8 are schematic diagrams exemplarily showing the auxiliary navigation screens in different formats; and
FIGS. 9 to 11 are block diagrams illustrating three variations of the embodiment of the navigation system, respectively.

Before the disclosure is described in greater detail, it should be noted that where considered appropriate, reference numerals or terminal portions of reference numerals have been repeated among the figures to indicate corresponding or analogous elements, which may optionally have similar characteristics.

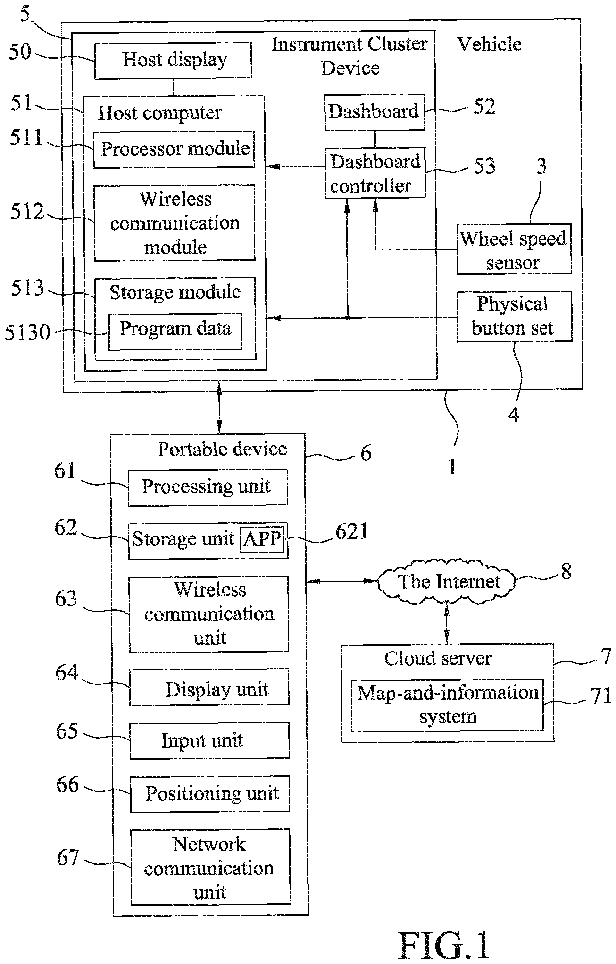

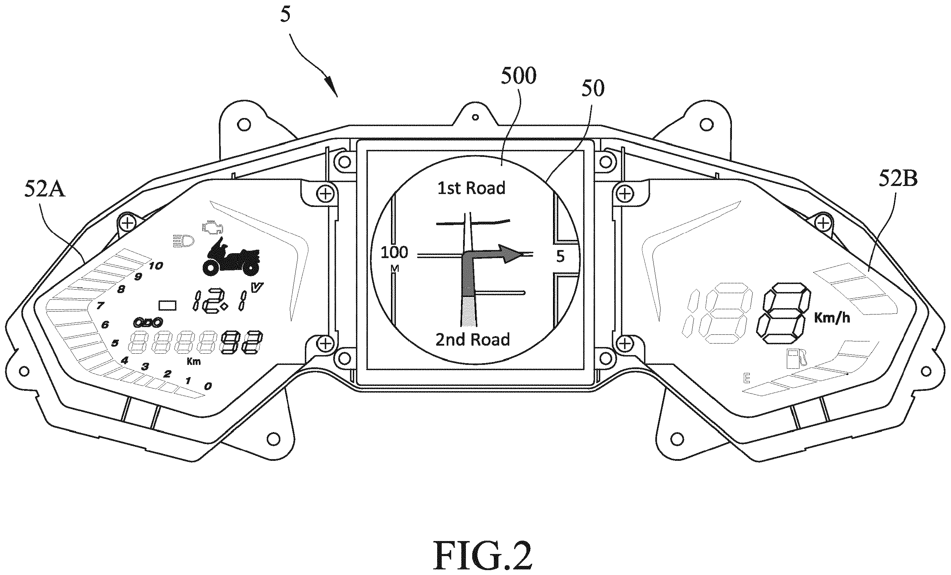

Referring to FIGS. 1 and 2, the embodiment of the method of displaying navigation information for a vehicle 1 with use of a portable device 6 will be described. The vehicle 1 may be, for example, a motorcycle, a car, an all terrain vehicle (ATV), a utility vehicle (UV), an electric vehicle, etc. In this embodiment, the vehicle 1 includes a wheel speed sensor 3 for sensing a wheel speed of the vehicle 1, a physical button set 4, and an instrument cluster device 5.

The embodiment is exemplarily implemented using a navigation system that includes the portable device 6, the wheel speed sensor 3 and the instrument cluster device 5. The portable device 6 may be, for example, a smartphone, a wearable device, a tablet computer, etc., which has a navigation function, and include a processing unit 61 (e.g., a single-core or multi-core processor), a storage unit 62 (e.g., flash memory) for storing application programs (APPs) 621, a wireless communication unit 63 (e.g., a Bluetooth module, a Wi-Fi module, a near field communication module) for communication with the instrument cluster device 5, a display unit 64 (e.g., a liquid crystal display (LCD), an organic light-emitting diode display), an input unit 65 (e.g., a keyboard, a touch screen, a microphone), a positioning unit 66 (e.g., a GPS device), and a network communication unit 67 for connection via a network (e.g., the Internet 8) to a cloud server 7 that includes a map-and-information system 71. The processing unit 61 is electrically connected to the storage unit 62, the wireless communication unit 63, the display unit 64, the input unit 65, the positioning unit 66 and the network communication unit 67. In one embodiment, the display unit 64 and the input unit 65 may be integrated together to form a touch display which can display images (such as an operation interface of one of the APPs 621) and which can receive input by touch operation of the user.

In this embodiment, the instrument cluster device 5 includes a host display 50, a host computer 51 that is electrically coupled to the host display 50, a dashboard 52, and a dashboard controller 53 that is electrically coupled to the dashboard 52 and the host computer 51. The dashboard 52 is configured to display specific information in a dedicated format, which is set by a manufacturer of the vehicle 1, and is not arbitrarily alterable as desired by a user. The dashboard controller 53 is configured to control display of the dashboard 52. As an example, in FIG. 2, the dashboard 52 is divided into a first part 52A and a second part 52B that are respectively arranged at left and right sides of the host display 50, and is particularly configured to display instrument cluster information such as an accumulated traveling distance of the vehicle 1, a traveling distance of an individual trip, a current voltage of the battery, a current speed of the vehicle 1, a current fuel level, current tire pressures, etc. , in predefined formats and arrangements. On the other hand, the host display 50 is configured as an ordinary display, such as a regular LCD, that is used to display an image based on any arbitrary image data provided by the host computer 51. For example, the host computer 51 may be operated to cause the host display 50 to display the instrument cluster information (e.g., the accumulated traveling distance of the vehicle 1, the traveling distance of an individual trip, the current voltage of the battery, he current speed of the vehicle 1, the current fuel level, the current tire pressures, etc) . The host computer 51 includes a processor module 511 (e.g., a single-core or multi-core processor), a wireless communication module 512 (e.g., a Bluetooth module, a Wi-Fi module, a near field communication module), and a storage module 513 (e.g., a hard disk drive, flashmemory, etc.) for storing program data 5130, such as an operating system (OS), firmware (FW), and application programs of the host computer 51. The processor module 511 is electrically coupled to the host display 50, the wireless communication module 512, the storage module 513, and the physical button set 4. The host computer 51 is capable of pairing with and/or connected to the portable device 6 via the wireless communication module 512 thereof and the wireless communication unit 63 of the portable device 6, so that the host computer 51 can receive data from the portable device 6, and control the host display 50 to display images based on the data received from the portable device 6. For example, when the host computer 51 has been paired with and is now communicatively coupled to the portable device 6 via wireless communication, the host computer 51 may cause the host display 50 to display information like vehicle speed, current time, weather, intelligent compass, notifications, vehicle finding, etc., which may be received from the portable device 6. In other embodiments, the host computer 51 may be connected to the portable device 6 via wired connection (e.g., a USB cable), and this disclosure is not limited in this respect.

In this embodiment, the wheel speed sensor 3 is electrically coupled to the dashboard controller 53, and provides the wheel speed sensed thereby to the dashboard controller 53. Then, the dashboard controller 53 provides the wheel speed acquired from the wheel speed sensor 3 to the host computer 51, so that both of the host display 50 and the dashboard 52 can display the wheel speed.

The physical button set 4 is electrically coupled to both of the host computer 51 and the dashboard controller 53, and is configured to be pressed by a user to generate signals for switching display of the host display 50 between a primary navigation screen and an auxiliary navigation screen, or for executing other functions (e.g., executing the pairing or connecting operation with the portable device 6, causing the host display 50 to show the instrument cluster information, etc.) as designed. When the physical button set 4 is pressed by the user, the physical button set 4 provides a signal corresponding to the pressing by the user to the host computer 51 and the dashboard controller 53.

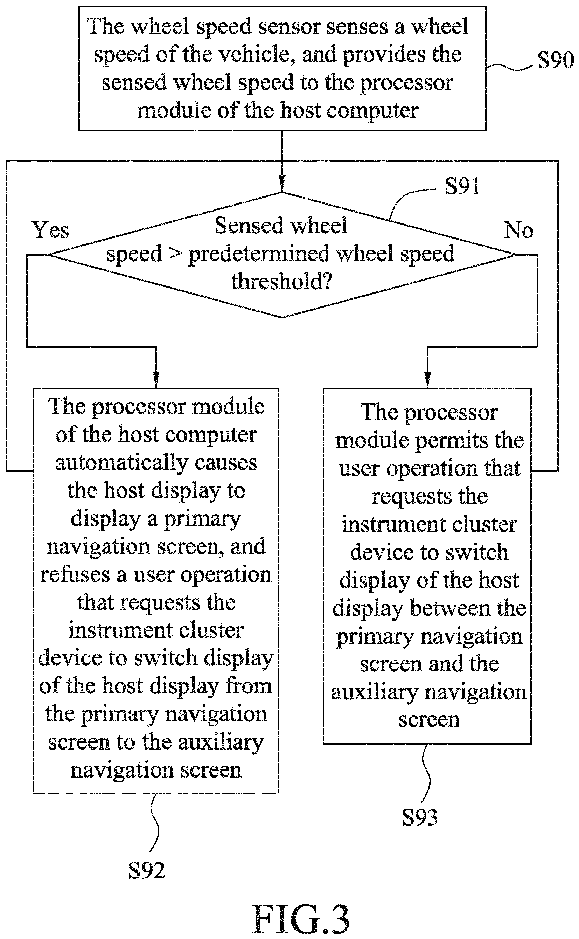

Referring to FIGS. 1 and 3, the embodiment is shown to include steps S90-S93.

In step S90, the wheel speed sensor 3 senses the wheel speed of the vehicle 1, and provides the wheel speed sensed thereby to the processor module 511 that is communicatively coupled to the processing unit 61 of the portable device 6 via the wireless communication module 512 and the wireless communication unit 63. Via the wireless communication between the processor module 511 and the processing unit 61, the processor module 511 may request the processing unit 61 to provide data for the primary navigation screen or the auxiliary navigation screen. Upon receipt of the request from the processor module 511, the processing unit 61 computes and acquires the data for the requested primary navigation screen or auxiliary navigation screen, and transmits the acquired data to the processor module 511, so that the processor module 512 can cause the host display 50 to display the requested primary navigation screen or auxiliary navigation screen based on the data received from the processing unit 61.

In step S91, the processor module 511 determines whether the wheel speed sensed by the wheel speed sensor 3 is greater than a predetermined wheel speed threshold. In this embodiment, the predetermined wheel speed threshold may range from 0 to 20 km/hr. The flow goes to step S92 when the determination is affirmative, and goes to step S93 when otherwise.

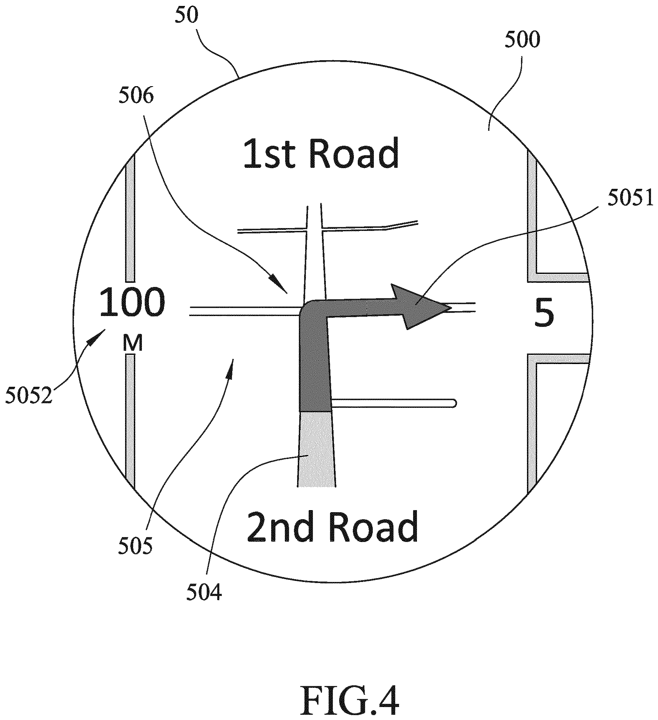

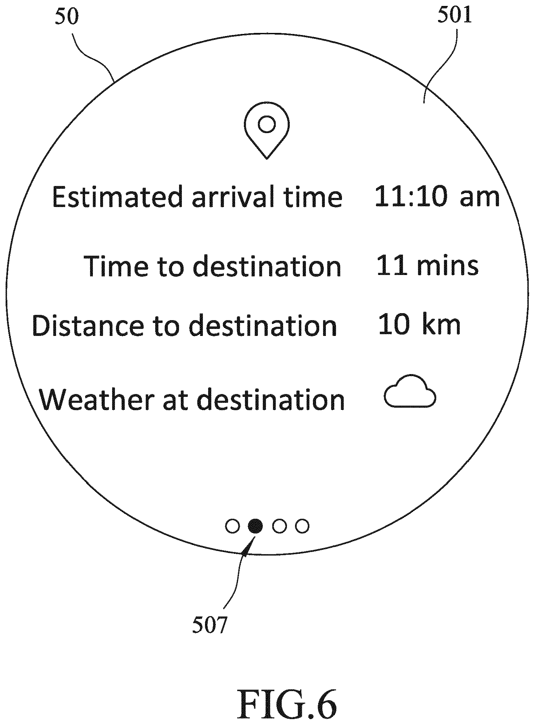

In step S92, the processor module 51 automatically causes the host display 50 to display the primary navigation screen (e.g., the screen 500 exemplarily shown in FIG. 4), and refuses or does not permit a user operation that requests the instrument cluster device 5 to switch the host display 50 from displaying the primary navigation screen to displaying the auxiliary navigation screen (e.g., the screens 501, 502, 503 exemplarily shown in FIGS. 6, 7 and 8, respectively). The refusing or not permitting the user operation herein may refer to that the host computer 51 ignores or omits the signals generated by the user operation, so that the host computer 51 does not perform operation as required by the user. In one embodiment, the host computer 51 may further cause the host display 50 to display a message that indicates that such operation by the user is not allowed at this time. In this step (step S92), the processor module 511 requests and causes the processing unit 61 of the portable device 6 to compute and acquire data for the primary navigation screen based on the map-and-information system 71 of the cloud server 7 and real-time positioning information provided by the positioning unit 66, and the portable device 6 then transmits the data for the primary navigation screen thus computed and acquired to the instrument cluster device 5 for display by the host display 50. Then, the flow goes back to step S91 again.

As shown in FIG. 4, the primary navigation screen (e.g., the screen 500) shows a map with a scale referred to hereinafter as a primary navigation scale and covering an area in a vicinity of the vehicle 1, and further shows, on the map, a navigation path 504 to a destination, and turning information 505 that includes a turning arrow 5051 relating to a next intersection to turn 506 on the navigation path 504, and that indicates a distance between the vehicle 1 and the next intersection to turn 506. As exemplified in FIG. 4, the navigation path 504 is shown in a first color, and the turning arrow 5051 in a form of a static pattern and in a second color that is different from the first color, and the distance between the vehicle 1 and the next intersection to turn 506 is shown by a text 5052 that indicates a distance of 100 meters. The difference between the first color and the second color may attract the driver's attention to notify the driver to make a turn at the next intersection, which is 100 meters ahead. In one implementation, the turning arrow 5051 may be shown in gradient colors and/or as a flashing arrow (not shown) .

In step S93, the processor module 511 permits the user operation that requests the instrument cluster device 5 to switch the host display 50 between displaying the primary navigation screen and displaying the auxiliary navigation screen. In other words, the user can switch the display of the host display 50 from the primary navigation screen to the auxiliary navigation screen, or from the auxiliary navigation screen back to the primary navigation screen. In detail, the processor module 511 requests and causes the processing unit 61 of the portable device 6 to compute and acquire data for the desired primary navigation screen or auxiliary navigation screen based on the map-and-information system 71 of the cloud server 7 and the real-time positioning information provided by the positioning unit 66, and the portable device 6 then transmits the data for the desired primary navigation screen or auxiliary navigation screen thus computed and acquired to the instrument cluster device 5 for display by the host display 50. Then, the flow goes back to step S91 again.

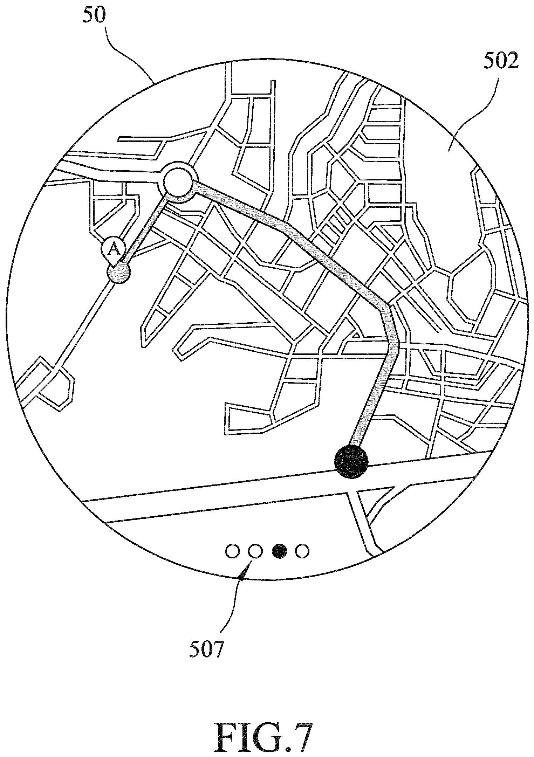

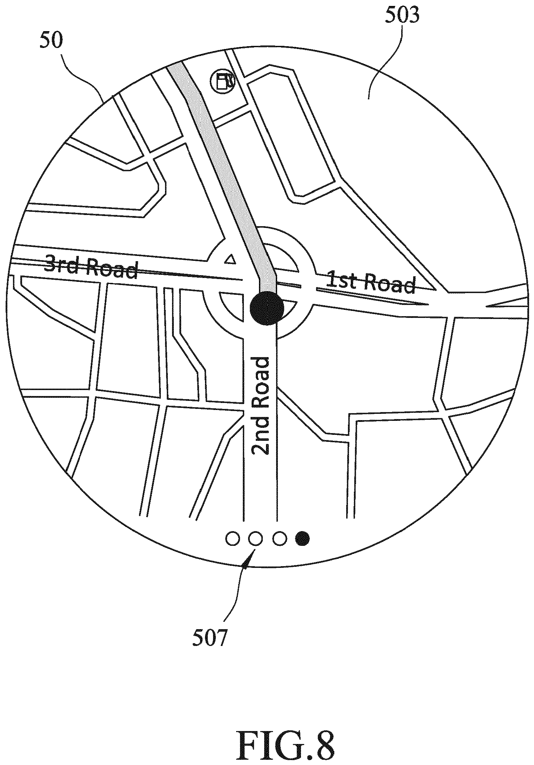

In an example that does not form part of the invention, as exemplified in FIG. 6, the auxiliary navigation screen is the screen 501 that is presented in a text form and that provides information associated with the destination. As exemplified in FIGS. 7 and 8, the auxiliary navigation screen is the screen 502, 503 that is presented in a map form and that shows a map covering an area in a vicinity of the vehicle 1 in a scale smaller than the primary navigation scale (i.e., the auxiliary navigation screen displays a larger map area than the primary navigation screen with the same display area).

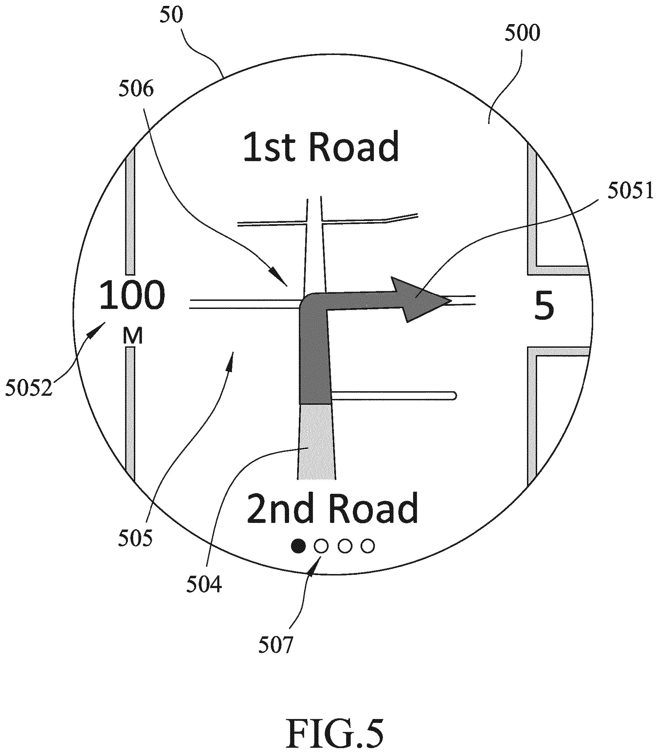

As mentioned hereinbefore, when the wheel speed is not greater than the predetermined wheel speed threshold, the processing module 511 permits the user to switch display of the host display 50 of the instrument cluster device 5 between the primary navigation screen and the auxiliary navigation screen. In such a case, referring to FIGS. 5 to 8, each of the primary navigation screen 500 and the auxiliary navigation screens 501, 502, 503 further shows a page indicator pattern 507, so that the user may be aware of a total number of available navigation screens and a page number of the navigation screen that is currently displayed. As exemplified in FIG. 5, it is known from the page indicator pattern 507 that there are four available navigation screens, and that the currently displayed navigation screen is the first page, which corresponds to the primary navigation screen 500. As exemplified in FIG. 8, it is known from the page indicator pattern 507 that the currently displayed navigation screen is the last page, which corresponds to the third one of the auxiliary navigation screens 503.

In this embodiment, it is preferred to permit the user to operate the physical button set 4 to manually switch display of the host display 50 of the instrument cluster device 5 between the primary navigation screen and the auxiliary navigation screen (s) when the sensed wheel speed is zero (i.e., the vehicle 1 has been stopped) . That is, if the driver wishes to manually operate the physical button set 4 (e.g., an upward button, a downward button, etc.) to switch display of the host device 50 to the auxiliary navigation screen for acquiring additional navigation information, the vehicle 1 has to be stopped first, so as to prevent the driver from distracted driving and to ensure driving safety.

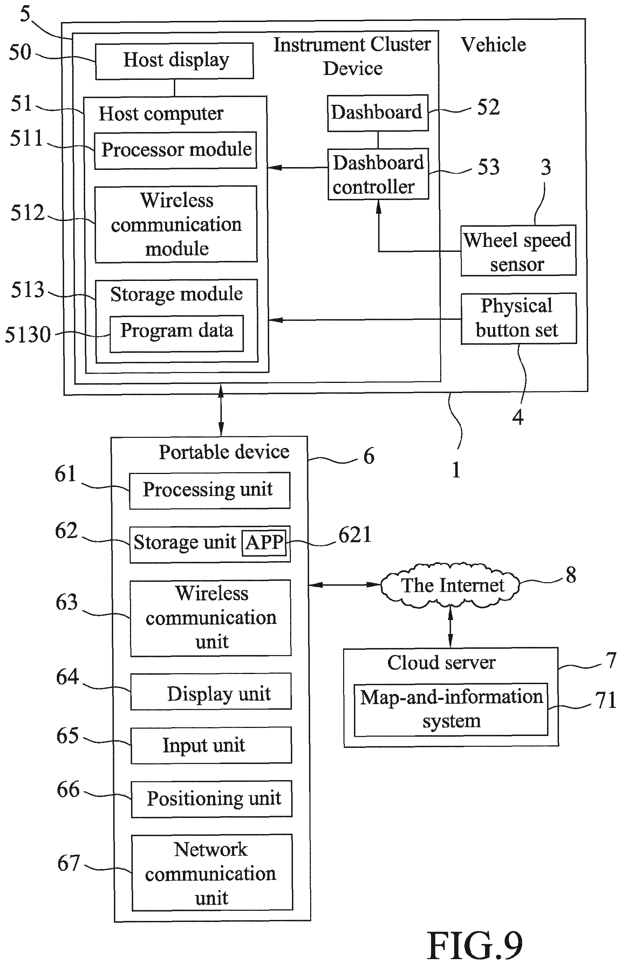

FIG. 9 shows a first variation of the embodiment, where the physical button set 4 is not electrically coupled to the dashboard controller 53, and the dashboard controller 53 receives the signal that is generated by the physical button set 4 and that corresponds to the pressing action by the user via the host computer 51.

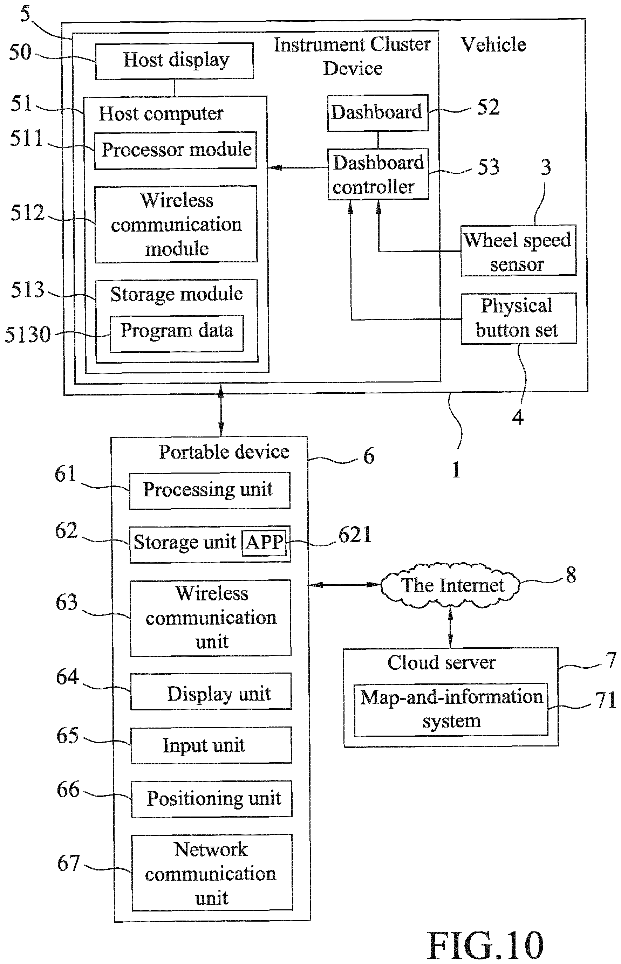

FIG. 10 shows a second variation of the embodiment, where the physical button set 4 is not electrically coupled to the host computer 51, and the host computer 51 receives the signal that is generated by the physical button set 4 and that corresponds to the pressing action by the user via the dashboard controller 53.

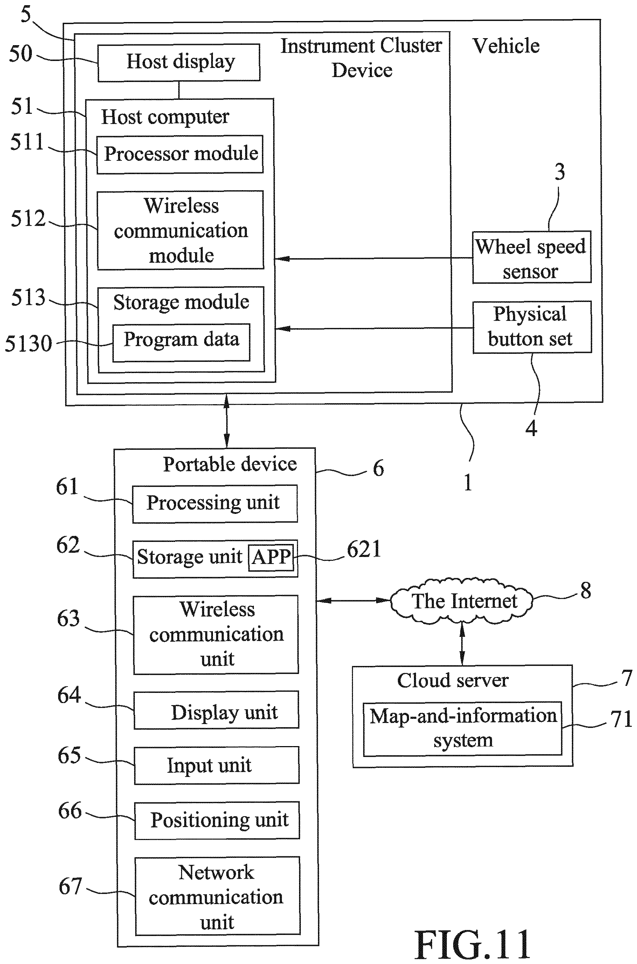

FIG. 11 shows a third variation of the embodiment, where the host display 50 and the host computer 51 are configured to perform all functions of the dashboard 52 and the dashboard controller 53 of the embodiment shown in FIG. 1, and thus the dashboard 52 and the dashboard controller 53 are omitted; and the wheel speed sensor 3 is electrically and directly coupled to the host computer 51 for providing the sensed wheel speed thereto.

In summary, the method of displaying navigation information for a vehicle with use of a portable device according to this disclosure is advantageous in: that the vehicle 1 does not need a built-in GPS device because the instrument cluster device 5 is capable of communication with the portable device 6 for acquiring the navigation information therefrom; that the driver is generally prevented from switching display of the host display 50 of the instrument cluster device 5 when driving, enhancing driving safety; and that the driver can still switch display of the host display 50 of the instrument cluster device 5 when the wheel speed is smaller than or equal to the predetermined wheel speed threshold (e.g., the vehicle 1 has been stopped) for acquiring the additional navigation information provided in the auxiliary navigation screen.

In the description above, for the purposes of explanation, numerous specific details have been set forth in order to provide a thorough understanding of the embodiment (s) . It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method of displaying navigation information for a vehicle (1) with use of a portable device (6) having a navigation function, said method **characterized by**:
providing the vehicle (1) including:
a wheel speed sensor (3); and
an instrument cluster device (5) that is electrically coupled to the wheel speed sensor (3), and that is communicatively coupled to the portable device (6) for receiving therefrom data for one of a primary navigation screen and an auxiliary navigation screen, and that is capable of displaying said one of the primary navigation screen and the auxiliary navigation screen based on the data,
wherein the primary navigation screen shows a map that covers an area in a vicinity of the vehicle (1) and that has a primary navigation scale, and
wherein the auxiliary navigation screen is presented in a map form where the auxiliary navigation screen shows a map that covers an area in a vicinity of the vehicle (1) and that has a scale smaller than the primary navigation scale;
sensing, by the wheel speed sensor (3), a wheel speed of the vehicle (1);
determining, by the instrument cluster device (5), whether the wheel speed sensed by the wheel speed sensor (3) is greater than a predetermined wheel speed threshold; and
automatically displaying, by the instrument cluster device (5), the primary navigation screen upon determining that the wheel speed sensed by the wheel speed sensor (3) is greater than the predetermined wheel speed threshold;
said method further comprising, before the automatically displaying the primary navigation screen:
receiving, by the instrument cluster device (5) from the portable device (6), the data for the primary navigation screen that is acquired through computation by the portable device (6);
said method further comprising:
refusing, by the instrument cluster device (5), a user operation that requests the instrument cluster device (5) to switch display of said instrument cluster device (5) from the primary navigation screen to the auxiliary navigation screen when the instrument cluster device (5) determines that the wheel speed sensed by the wheel speed sensor (3) is greater than the predetermined wheel speed threshold;
said method further comprising:
switching, by the instrument cluster device (5), display of the instrument cluster device (5) from the primary navigation screen to the auxiliary navigation screen upon receipt of a user operation that requests the instrument cluster device (5) to switch display of the instrument cluster device (5) from the primary navigation screen to the auxiliary navigation screen when the instrument cluster device (5) determines that the wheel speed sensed by the wheel speed sensor (3) is not greater than a predetermined wheel speed threshold;
wherein the data for each of the primary navigation screen and the auxiliary navigation screen is acquired through computation by the portable device (6), and is transmitted to the instrument cluster device (5) for display thereby.

2. The method of Claim 1, **characterized in that** the primary navigation screen further shows, on the map shown thereby, a navigation path to a destination, and turning information that includes a turning arrow relating to a next intersection to turn on the navigation path, and that indicates a distance between the vehicle (1) and the next intersection to turn.

3. The method of Claim 2, **characterized in that** the primary navigation screen shows the navigation path in a first color, and shows the turning arrow in a form of a static pattern and in a second color that is different from the first color.

4. The method of Claim 2, **characterized in that** the primary navigation screen shows the turning arrow in one of a form of an arrow with gradient colors and a form of a flashing arrow.

5. The method of Claim 1, further **characterized by**:
switching, by the instrument cluster device (5), display of the instrument cluster device (5) from one of the primary navigation screen and the auxiliary navigation screen to the other one of the primary navigation screen and the auxiliary navigation screen in response to receipt of a user operation that requests the instrument cluster device (5) to switch display of the instrument cluster device (5) from one of the primary navigation screen and the auxiliary navigation screen to the other one of the primary navigation screen and the auxiliary navigation screen when the instrument cluster device (5) determines that the wheel speed sensed by the wheel speed sensor (3) is zero.

6. A navigation system adapted for enabling a vehicle (1) to displaying navigation information, said navigation system **characterized by**:
a portable device (6) having a navigation function;
a wheel speed sensor (3) configured to sense a wheel speed of the vehicle (1); and
an instrument cluster device (5) that is electrically coupled to said wheel speed sensor (3) for acquiring the wheel speed sensed therefrom, that is communicatively coupled to said portable device (6) for receiving therefrom data for one of a primary navigation screen and an auxiliary navigation screen, and that is capable of displaying said one of the primary navigation screen and the auxiliary navigation screen based on the data;
wherein the primary navigation screen shows a map that covers an area in a vicinity of the vehicle (1) and that has a primary navigation scale;
wherein the auxiliary navigation screen is presented in a map form where the auxiliary navigation screen shows a map that covers an area in a vicinity of the vehicle (1) and that has a scale smaller than the primary navigation scale;
wherein said instrument cluster device (5) is configured to determine whether the wheel speed sensed by said wheel speed sensor (3) is greater than a predetermined wheel speed threshold, and to automatically display the primary navigation screen upon determining that the wheel speed sensed by said wheel speed sensor (3) is greater than the predetermined wheel speed threshold;
wherein said portable device (6) is configured to compute data for the primary navigation screen and data for the auxiliary navigation screen, and to transmit the data for the primary navigation screen and the data for the auxiliary navigation screen to said instrument cluster device (5);
wherein said instrument cluster device (5) is configured to automatically display the primary navigation screen based on data computed by and received from said portable device (6) upon determining that the wheel speed sensed by said wheel speed sensor (3) is greater than the predetermined wheel speed threshold;
wherein said instrument cluster device (5) is further configured to refuse a user operation that requests said instrument cluster device (5) to switch display of said instrument cluster device (5) from the primary navigation screen to the auxiliary navigation screen when said instrument cluster device (5) determines that the wheel speed sensed by said wheel speed sensor (3) is greater than the predetermined wheel speed threshold;
wherein said portable device (6) is configured to switch display of said instrument cluster device (5) from the primary navigation screen to the auxiliary navigation screen upon receipt of a user operation that requests said instrument cluster device (5) to switch display of the instrument cluster device (5) from the primary navigation screen to the auxiliary navigation screen when said instrument cluster device (5) determines that the wheel speed sensed by said wheel speed sensor (3) is not greater than the predetermined wheel speed threshold.

7. The navigation system of Claim 6, **characterized in that** the primary navigation screen further shows, on the map shown thereby, a navigation path to a destination, and turning information that includes a turning arrow relating to a next intersection to turn on the navigation path, and that indicates a distance between the vehicle (1) and the next intersection to turn.

8. The navigation system of Claim 7, **characterized in that** the primary navigation screen shows the navigation path in a first color, and shows the turning arrow in a form of a static pattern and in a second color that is different from the first color.

9. The navigation system of Claim 7, **characterized in that** the primary navigation screen shows the turning arrow in one of a form of an arrow with gradient colors and a form of a flashing arrow.

10. The navigation system of Claim 6, further **characterized by**:
a physical button set (4) that is electrically coupled to said instrument cluster device (5) and that is configured to be pressed by a user to switch display of said instrument cluster device (5) between the primary navigation screen and the auxiliary navigation screen when said instrument cluster device (5) determines that the wheel speed sensed by said wheel speed sensor (3) is not greater than the predetermined wheel speed threshold.

11. The navigation system of Claim 10, **characterized in that** said instrument cluster device (5) is further configured to switch display of said instrument cluster device (5) from one of the primary navigation screen and the auxiliary navigation screen to the other one of the primary navigation screen and the auxiliary navigation screen in response to receipt of a user operation that requests said instrument cluster device (5) to switch display of said instrument cluster device (5) from said one of the primary navigation screen and the auxiliary navigation screen to the other one of the primary navigation screen and the auxiliary navigation screen when said instrument cluster device (5) determines that the wheel speed sensed by said wheel speed sensor (3) is zero.

12. The navigation system of Claim 10, **characterized in that** said instrument cluster device (5) includes a dashboard controller (53), and a host computer (51) coupled to said dashboard controller (53);
wherein said wheel speed sensor (3) is electrically coupled to said dashboard controller (53) for providing the wheel speed sensed thereby to said dashboard controller (53); and
wherein said physical button set (4) is electrically coupled to said dashboard controller (53) and said host computer (51) for transmitting a signal corresponding to the pressing by the user to said dashboard controller (53) and said host computer (51) .

13. The navigation system of Claim 10, **characterized in that** said instrument cluster device (5) includes a dashboard controller (53), and a host computer (51) coupled to said dashboard controller (53);
wherein said wheel speed sensor (3) is electrically coupled to said dashboard controller (53) for providing the wheel speed sensed thereby to said dashboard controller (53); and
wherein said physical button set (4) is electrically coupled to said host computer (51) for transmitting a signal corresponding to the pressing by the user to said host computer (51).

14. The navigation system of Claim 10, **characterized in that** said instrument cluster device (5) includes a dashboard controller (53), and a host computer (51) coupled to said dashboard controller (53);
wherein said wheel speed sensor (3) is electrically coupled to said dashboard controller (53) for providing the wheel speed sensed thereby to said dashboard controller (53); and
wherein said physical button set (4) is electrically coupled to said dashboard controller (53) for transmitting a signal corresponding to the pressing by the user to said dashboard controller (53).

15. The navigation system of Claim 10, **characterized in that** said instrument cluster device (5) includes a host computer (51), and said wheel speed sensor (3) is electrically coupled to said host computer (51) for providing the wheel speed sensed thereby to said host computer (51); and
wherein said physical button set (4) is electrically coupled to said host computer (51) for transmitting a signal corresponding to the pressing by the user to said host computer (51).

## Patentansprüche

1. Verfahren zum Anzeigen von Navigationsinformationen für ein Fahrzeug (1) mit Verwendung einer tragbaren Vorrichtung (6), die eine Navigationsfunktion aufweist, wobei das Verfahren **gekennzeichnet ist durch**:
Bereitstellen des Fahrzeugs (1), das Folgendes umfasst:
einen Raddrehzahlsensor (3); und
eine Kombinationsinstrumentvorrichtung (5), die elektrisch mit dem Raddrehzahlsensor (3) gekoppelt ist, und die kommunikativ mit der tragbaren Vorrichtung (6) gekoppelt ist, um von dieser Daten für einen aus einem primären Navigationsbildschirm und einem Hilfsnavigationsbildschirm zu empfangen, und die in der Lage ist, den einen aus dem primären Navigationsbildschirm und dem Hilfsnavigationsbildschirm auf der Grundlage der Daten anzuzeigen,
wobei der primäre Navigationsbildschirm eine Karte zeigt, die einen Bereich in der Nähe des Fahrzeugs (1) abdeckt und die einen primären Navigationsmaßstab aufweist, und
wobei der Hilfsnavigationsbildschirm in einer Kartenform dargestellt wird, wobei der Hilfsnavigationsbildschirm eine Karte anzeigt, die einen Bereich in der Nähe des Fahrzeugs (1) abdeckt und die einen Maßstab aufweist, der kleiner als der primäre Navigationsmaßstab ist;
das Abfühlen einer Raddrehzahl des Fahrzeugs (1) **durch** den Raddrehzahlsensor (3);
das Bestimmen **durch** die Kombinationsinstrumentvorrichtung (5), ob die **durch** den Raddrehzahlsensor (3) abgefühlte Raddrehzahl größer als ein vorbestimmter Raddrehzahlschwellwert ist; und
das automatische Anzeigen des primären Navigationsbildschirms **durch** die Kombinationsinstrumentvorrichtung (5) bei der Bestimmung, dass die **durch** den Raddrehzahlsensor (3) abgefühlte Raddrehzahl größer als der vorbestimmte Raddrehzahlschwellwert ist;
wobei das Verfahren ferner vor dem automatischen Anzeigen des primären Navigationsbildschirms Folgendes umfasst:
das Empfangen der Daten für den primären Navigationsbildschirm von der tragbaren Vorrichtung (6) **durch** die Kombinationsinstrumentvorrichtung (5), die **durch** Berechnung durch die tragbare Vorrichtung (6) erfasst wurden;
wobei das Verfahren außerdem Folgendes umfasst:
das Ablehnen einer Benutzer-Operation **durch** die Kombinationsinstrumentvorrichtung (5), die die Kombinationsinstrumentvorrichtung (5) dazu auffordert, die Anzeige der Kombinationsinstrumentvorrichtung (5) von dem primären Navigationsbildschirm auf den Hilfsnavigationsbildschirm umzuschalten, wenn die Kombinationsinstrumentvorrichtung (5) bestimmt, dass die **durch** den Raddrehzahlsensor (3) abgefühlte Raddrehzahl größer als der vorbestimmte Raddrehzahlschwellwert ist;
wobei das Verfahren ferner Folgendes umfasst:
das Umschalten der Anzeige der Kombinationsinstrumentvorrichtung (5) von dem primären Navigationsbildschirm auf den Hilfsnavigationsbildschirm **durch** die Kombinationsinstrumentvorrichtung (5), wenn eine Benutzer-Operation empfangen wird, die die Kombinationsinstrumentvorrichtung (5) dazu auffordert, die Anzeige der Kombinationsinstrumentvorrichtung (5) von dem primären Navigationsbildschirm auf den Hilfsnavigationsbildschirm umzuschalten, wenn die Kombinationsinstrumentvorrichtung (5) bestimmt, dass die **durch** den Raddrehzahlsensor (3) abgefühlte Raddrehzahl nicht größer als ein vorbestimmter Raddrehzahlschwellwert ist;
wobei die Daten für jeden aus dem primären Navigationsbildschirm und dem Hilfsnavigationsbildschirm **durch** Berechnung **durch** die tragbare Vorrichtung (6) erfasst werden und an die Kombinationsinstrumentvorrichtung (5) übertragen werden, um von dieser angezeigt zu werden.

2. Verfahren nach Anspruch 1, **dadurch gekennzeichnet, dass** der primäre Navigationsbildschirm ferner auf der von diesem angezeigten Karte einen Navigationspfad zu einem Ziel anzeigt, und Abbiegeinformationen umfasst, die einen Abbiegepfeil umfassen, der sich auf eine nächste Kreuzung zum Abbiegen auf dem Navigationspfad bezieht und eine Distanz zwischen dem Fahrzeug (1) und der nächsten Kreuzung zum Abbiegen anzeigt.

3. Verfahren nach Anspruch 2, **dadurch gekennzeichnet, dass** der primäre Navigationsbildschirm den Navigationspfad in einer ersten Farbe anzeigt und den Abbiegepfeil in Form eines statischen Musters und in einer zweiten Farbe anzeigt, die sich von der ersten Farbe unterscheidet.

4. Verfahren nach Anspruch 2, **dadurch gekennzeichnet, dass** der primäre Navigationsbildschirm den Abbiegepfeil in einer aus einer Form eines Pfeils mit Farbverlauf und einer Form eines blinkenden Pfeils anzeigt.

5. Verfahren nach Anspruch 1, ferner **gekennzeichnet durch**:
Umschalten der Anzeige der Kombinationsinstrumentvorrichtung (5) **durch** die Kombinationsinstrumentvorrichtung (5) von einem aus dem primären Navigationsbildschirm und dem Hilfsnavigationsbildschirm auf den anderen aus dem primären Navigationsbildschirm und dem Hilfsnavigationsbildschirm als Reaktion auf das Empfangen einer Benutzer-Operation, die die Kombinationsinstrumentvorrichtung (5) dazu auffordert, die Anzeige der Kombinationsinstrumentvorrichtung (5) von einem aus dem primären Navigationsbildschirm und dem Hilfsnavigationsbildschirm auf den anderen aus dem primären Navigationsbildschirm und dem Hilfsnavigationsbildschirm umzuschalten, wenn die Kombinationsinstrumentvorrichtung (5) bestimmt, dass die **durch** den Raddrehzahlsensor (3) abgefühlte Raddrehzahl null beträgt.

6. Navigationssystem, das ausgebildet ist, um einem Fahrzeug (1) das Anzeigen von Navigationsinformationen ermöglicht, wobei das Navigationssystem **gekennzeichnet ist durch**:
eine tragbare Vorrichtung (6), die eine Navigationsfunktion aufweist;
einen Raddrehzahlsensor (3), der ausgelegt ist, um eine Raddrehzahl des Fahrzeugs (1) abzufühlen; und
eine Kombinationsinstrumentvorrichtung (5), die elektrisch mit dem Raddrehzahlsensor (3) gekoppelt ist, um die von diesem abgefühlte Raddrehzahl zu erfassen, die kommunikativ mit der tragbaren Vorrichtung (6) gekoppelt ist, um von dieser Daten für einen aus einem primären Navigationsbildschirm und einem Hilfsnavigationsbildschirm zu empfangen, und die in der Lage ist, den einen aus dem primären Navigationsbildschirm und dem Hilfsnavigationsbildschirm auf der Grundlage der Daten anzuzeigen;
wobei der primäre Navigationsbildschirm eine Karte zeigt, die einen Bereich in der Nähe des Fahrzeugs (1) abdeckt und die einen primären Navigationsmaßstab aufweist;
wobei der Hilfsnavigationsbildschirm in einer Kartenform dargestellt ist, wobei der Hilfsnavigationsbildschirm eine Karte zeigt, die einen Bereich in der Nähe des Fahrzeugs (1) abdeckt und die einen Maßstab aufweist, der kleiner als der primäre Navigationsmaßstab ist;
wobei die Kombinationsinstrumentvorrichtung (5) ausgelegt ist, um zu bestimmen, ob die **durch** den Raddrehzahlsensor (3) abgefühlte Raddrehzahl größer als ein vorbestimmter Raddrehzahlschwellwert ist; und um den primären Navigationsbildschirm bei Bestimmung, dass die **durch** den Raddrehzahlsensor (3) abgefühlte Raddrehzahl größer als der vorbestimmte Raddrehzahlschwellwert ist, automatisch anzuzeigen;
wobei die tragbare Vorrichtung (6) ausgelegt ist, um Daten für den primären Navigationsbildschirm und Daten für den Hilfsnavigationsbildschirm zu berechnen, und die Daten für den primären Navigationsbildschirm und die Daten für den Hilfsnavigationsbildschirm an die Kombinationsinstrumentvorrichtung (5) zu übertragen;
wobei die Kombinationsinstrumentvorrichtung (5) ausgelegt ist, um den primären Navigationsbildschirm auf der Grundlage von Daten, die **durch** die tragbare Vorrichtung (6) berechnet wurden und von dieser empfangen wurden, bei Bestimmung, dass die **durch** den Raddrehzahlsensor (3) abgefühlte Raddrehzahl größer als der vorbestimmte Raddrehzahlschwellwert ist, anzuzeigen;
wobei die Kombinationsinstrumentvorrichtung (5) ferner ausgelegt ist, um eine Benutzer-Operation abzulehnen, die die Kombinationsinstrumentvorrichtung (5) dazu auffordert, die Anzeige der Kombinationsinstrumentvorrichtung (5) von dem primären Navigationsbildschirm auf den Hilfsnavigationsbildschirm umzuschalten, wenn die Kombinationsinstrumentvorrichtung (5) bestimmt, dass die **durch** den Raddrehzahlsensor (3) abgefühlte Raddrehzahl größer als der vorbestimmte Raddrehzahlschwellwert ist;
wobei die tragbare Vorrichtung (6) ausgelegt ist, um die Anzeige der Kombinationsinstrumentvorrichtung (5) beim Empfangen einer Benutzer-Operation, die die Kombinationsinstrumentvorrichtung (5) dazu auffordert, die Anzeige der Kombinationsinstrumentvorrichtung (5) von dem primären Navigationsbildschirm auf den Hilfsnavigationsbildschirm umzuschalten, wenn die Kombinationsinstrumentvorrichtung (5) bestimmt, dass die **durch** den Raddrehzahlsensor (3) abgefühlte Raddrehzahl nicht größer als der vorbestimmte Raddrehzahlschwellwert ist.

7. Navigationssystem nach Anspruch 6, **dadurch gekennzeichnet, dass** der primäre Navigationsbildschirm ferner auf der von diesem angezeigten Karte einen Navigationspfad zu einem Ziel und Abbiegeinformationen anzeigt, die einen Abbiegepfeil umfassen, der sich auf eine nächste Kreuzung zum Abbiegen auf dem Navigationspfad bezieht, und eine Distanz zwischen dem Fahrzeug (1) und der nächsten Kreuzung zum Abbiegen anzeigt.

8. Navigationssystem nach Anspruch 7, **dadurch gekennzeichnet, dass** der primäre Navigationsbildschirm den Navigationspfad in einer ersten Farbe zeigt und den Abbiegepfeil in einer Form eines statischen Musters und in einer zweiten Farbe, die sich von der ersten Farbe unterscheidet, zeigt.

9. Navigationssystem nach Anspruch 7, **dadurch gekennzeichnet, dass** der primäre Navigationsbildschirm den Abbiegepfeil in einer aus einer Form eines Pfeils mit Farbverlauf und einer Form eines blinkenden Pfeils anzeigt.

10. Navigationssystem nach Anspruch 6, das ferner durch Folgendes gekennzeichnet ist:
einen physischen Tastensatz (4), der elektrisch mit der Kombinationsinstrumentvorrichtung (5) gekoppelt ist und der ausgelegt ist, um durch einen Benutzer gedrückt zu werden, um die Anzeige der Kombinationsinstrumentvorrichtung (5) zwischen dem primären Navigationsbildschirm und dem Hilfsnavigationsbildschirm umzuschalten, wenn die Kombinationsinstrumentvorrichtung (5) bestimmt, dass die von dem Raddrehzahlsensor (3) abgefühlte Raddrehzahl nicht größer als der vorbestimmte Raddrehzahlschwellwert ist.

11. Navigationssystem nach Anspruch 10, **dadurch gekennzeichnet, dass** die Kombinationsinstrumentvorrichtung (5) ferner ausgelegt ist, um die Anzeige der Kombinationsinstrumentvorrichtung (5) von einem aus dem primären Navigationsbildschirm und dem Hilfsnavigationsbildschirm auf den anderen aus dem primären Navigationsbildschirm und dem Hilfsnavigationsbildschirm als Reaktion auf das Empfangen einer Benutzer-Operation umzuschalten, die die Kombinationsinstrumentvorrichtung (5) dazu auffordert, die Anzeige der Kombinationsinstrumentvorrichtung (5) von dem einem aus dem primären Navigationsbildschirm und dem Hilfsnavigationsbildschirms auf den anderen aus dem primären Navigationsbildschirm und dem Hilfsnavigationsbildschirm umzuschalten, wenn die Kombinationsinstrumentvorrichtung (5) bestimmt, dass die durch den Raddrehzahlsensor (3) abgefühlte Raddrehzahl null beträgt.

12. Navigationssystem nach Anspruch 10, **dadurch gekennzeichnet, dass** die Kombinationsinstrumentvorrichtung (5) eine Armaturenbrettsteuerung (53) und einen Hostrechner (51) umfasst, der mit der Armaturenbrettsteuerung (53) gekoppelt ist;
wobei der Raddrehzahlsensor (3) elektrisch mit der Armaturenbrettsteuerung (53) gekoppelt ist, um der Armaturenbrettsteuerung (53) die abgefühlte Raddrehzahl bereitzustellen; und
wobei der physische Tastensatz (4) elektrisch mit der Armaturenbrettsteuerung (53) und dem Hostrechner (51) gekoppelt ist, um ein Signal, das dem Drücken durch den Benutzer entspricht, an die Armaturenbrettsteuerung (53) und den Hostrechner (51) zu übertragen.

13. Navigationssystem nach Anspruch 10, **dadurch gekennzeichnet, dass** die Kombinationsinstrumentvorrichtung (5) eine Armaturenbrettsteuerung (53) und einen Hostrechner (51) umfasst, der mit der Armaturenbrettsteuerung (53) gekoppelt ist;
wobei der Raddrehzahlsensor (3) elektrisch mit der Armaturenbrettsteuerung (53) gekoppelt ist, um die von diesem abgefühlte Raddrehzahl der Armaturenbrettsteuerung (53) bereitzustellen; und
wobei der physische Tastensatz (4) elektrisch mit dem Hostrechner (51) gekoppelt ist, um ein Signal an den Hostrechner (51) zu übertragen, das dem Drücken durch den Benutzer entspricht.

14. Navigationssystem nach Anspruch 10, **dadurch gekennzeichnet, dass** die Kombinationsinstrumentvorrichtung (5) eine Armaturenbrettsteuerung (53) und einen Hostrechner (51) umfasst, der mit der Armaturenbrettsteuerung (53) gekoppelt ist;
wobei der Raddrehzahlsensor (3) elektrisch mit der Armaturenbrettsteuerung (53) gekoppelt ist, um die von diesem abgefühlte Raddrehzahl der Armaturenbrettsteuerung (53) bereitzustellen; und
wobei der physische Tastensatz (4) elektrisch mit der Armaturenbrettsteuerung (53) gekoppelt ist, um ein Signal an die Armaturenbrettsteuerung (53) zu übertragen, das dem Drücken durch den Benutzer entspricht.

15. Navigationssystem nach Anspruch 10, **dadurch gekennzeichnet, dass** die Kombinationsinstrumentvorrichtung (5) einen Hostrechner (51) umfasst, und der Raddrehzahlsensor (3) elektrisch mit dem Hostrechner (51) gekoppelt ist, um die von diesem abgefühlte Raddrehzahl dem Hostrechner (51) bereitzustellen; und
wobei der physische Tastensatz (4) elektrisch mit dem Hostrechner (51) gekoppelt ist, um ein Signal an den Hostrechner (51) zu übertragen, das dem Drücken durch den Benutzer entspricht.

## Revendications

1. Procédé d'affichage d'informations de navigation pour un véhicule (1), à l'aide d'un dispositif portable (6) présentant une fonction de navigation, ledit procédé étant **caractérisé par** les étapes ci-dessous consistant à :
fournir au véhicule (1) les éléments ci-dessous :
un capteur de vitesse de roue (3) ; et
un dispositif de groupe d'instruments (5) qui est couplé électriquement au capteur de vitesse de roue (3), et qui est couplé en communication au dispositif portable (6) en vue de recevoir de celui-ci des données pour un écran parmi un écran de navigation principal et un écran de navigation auxiliaire, et qui est en mesure d'afficher ledit un écran parmi l'écran de navigation principal et l'écran de navigation auxiliaire sur la base des données ;
dans lequel l'écran de navigation principal montre une carte qui couvre une zone à proximité du véhicule (1) et qui présente une échelle de navigation principale ; et
dans lequel l'écran de navigation auxiliaire est présenté sous une forme de carte où l'écran de navigation auxiliaire montre une carte qui couvre une zone à proximité du véhicule (1) et qui présente une échelle plus petite que l'échelle de navigation principale ;
détecter, par le biais du capteur de vitesse de roue (3), une vitesse de roue du véhicule (1) ;
déterminer, par le biais du dispositif de groupe d'instruments (5), si la vitesse de roue détectée par le capteur de vitesse de roue (3) est supérieure à un seuil de vitesse de roue prédéterminé ; et
afficher automatiquement, par le biais du dispositif de groupe d'instruments (5), l'écran de navigation principal lorsqu'il est déterminé que la vitesse de roue détectée par le capteur de vitesse de roue (3) est supérieure au seuil de vitesse de roue prédéterminé ;
ledit procédé comprenant en outre, avant l'étape d'affichage automatique de l'écran de navigation principal, l'étape ci-dessous consistant à :
recevoir, par le biais du dispositif de groupe d'instruments (5), en provenance du dispositif portable (6), les données pour l'écran de navigation principal qui sont acquises, par calcul, par le dispositif portable (6) ;
ledit procédé comprenant en outre l'étape ci-dessous consistant à :
refuser, par le biais du dispositif de groupe d'instruments (5), une opération utilisateur qui demande au dispositif de groupe d'instruments (5) de commuter l'affichage dudit dispositif de groupe d'instruments (5), de l'écran de navigation principal à l'écran de navigation auxiliaire, lorsque le dispositif de groupe d'instruments (5) détermine que la vitesse de roue détectée par le capteur de vitesse de roue (3) est supérieure au seuil de vitesse de roue prédéterminé ;
ledit procédé comprenant en outre l'étape ci-dessous consistant à :
commuter, par le biais du dispositif de groupe d'instruments (5), l'affichage du dispositif de groupe d'instruments (5), de l'écran de navigation principal à l'écran de navigation auxiliaire, suite à la réception d'une opération utilisateur qui demande au dispositif de groupe d'instruments (5) de commuter l'affichage du dispositif de groupe d'instruments (5), de l'écran de navigation principal à l'écran de navigation auxiliaire, lorsque le dispositif de groupe d'instruments (5) détermine que la vitesse de roue détectée par le capteur de vitesse de roue (3) n'est pas supérieure à un seuil de vitesse de roue prédéterminé ;
dans lequel les données pour chaque écran parmi l'écran de navigation principal et l'écran de navigation auxiliaire sont acquises, par calcul, par le dispositif portable (6), et sont transmises au dispositif de groupe d'instruments (5) en vue d'être affichées par celui-ci.

2. Procédé selon la revendication 1, **caractérisé en ce que** l'écran de navigation principal montre en outre, sur la carte montrée par celui-ci, un chemin de navigation vers une destination, et des informations de virage qui incluent une flèche de virage relative à une prochaine intersection pour tourner sur le chemin de navigation, et qui indiquent une distance entre le véhicule (1) et la prochaine intersection pour tourner.

3. Procédé selon la revendication 2, **caractérisé en ce que** l'écran de navigation principal montre le chemin de navigation dans une première couleur, et montre la flèche de virage sous la forme d'un motif statique et dans une seconde couleur qui est différente de la première couleur.

4. Procédé selon la revendication 2, **caractérisé en ce que** l'écran de navigation principal montre la flèche de virage sous une forme parmi une forme de flèche avec des couleurs dégradées et une forme de flèche clignotante.

5. Procédé selon la revendication 1, **caractérisé en outre par** l'étape ci-dessous consistant à :
commuter, par le biais du dispositif de groupe d'instruments (5), l'affichage du dispositif de groupe d'instruments (5), de l'un parmi l'écran de navigation principal et l'écran de navigation auxiliaire à l'autre parmi l'écran de navigation principal et l'écran de navigation auxiliaire, en réponse à la réception d'une opération utilisateur qui demande au dispositif de groupe d'instruments (5) de commuter l'affichage du dispositif de groupe d'instruments (5) de l'un parmi l'écran de navigation principal et l'écran de navigation auxiliaire à l'autre parmi l'écran de navigation principal et l'écran de navigation auxiliaire, lorsque le dispositif de groupe d'instruments (5) détermine que la vitesse de roue détectée par le capteur de vitesse de roue (3) est nulle.

6. Système de navigation apte à permettre à un véhicule (1) d'afficher des informations de navigation, ledit système de navigation étant **caractérisé par** :
un dispositif portable (6) présentant une fonction de navigation ;
un capteur de vitesse de roue (3) configuré de manière à détecter une vitesse de roue du véhicule (1) ; et
un dispositif de groupe d'instruments (5) qui est couplé électriquement audit capteur de vitesse de roue (3) pour acquérir la vitesse de roue détectée à partir de celui-ci, qui est couplé en communication audit dispositif portable (6) pour recevoir, en provenance de celui-ci, des données pour un écran parmi un écran de navigation principal et un écran de navigation auxiliaire, et qui est en mesure d'afficher ledit un écran parmi l'écran de navigation principal et l'écran de navigation auxiliaire, sur la base des données ;
dans lequel l'écran de navigation principal montre une carte qui couvre une zone à proximité du véhicule (1) et qui présente une échelle de navigation principale ;
dans lequel l'écran de navigation auxiliaire est présenté sous une forme de carte où l'écran de navigation auxiliaire montre une carte qui couvre une zone à proximité du véhicule (1) et qui présente une échelle plus petite que l'échelle de navigation principale ;
dans lequel ledit dispositif de groupe d'instruments (5) est configuré de manière à déterminer si la vitesse de roue détectée par ledit capteur de vitesse de roue (3) est supérieure à un seuil de vitesse de roue prédéterminé, et à afficher automatiquement l'écran de navigation principal lorsqu'il est déterminé que la vitesse de roue détectée par ledit capteur de vitesse de roue (3) est supérieure au seuil de vitesse de roue prédéterminé ;
dans lequel ledit dispositif portable (6) est configuré de manière à calculer des données pour l'écran de navigation principal et des données pour l'écran de navigation auxiliaire, et à transmettre les données pour l'écran de navigation principal et les données pour l'écran de navigation auxiliaire, audit dispositif de groupe d'instruments (5) ;
dans lequel ledit dispositif de groupe d'instruments (5) est configuré de manière à afficher automatiquement l'écran de navigation principal sur la base de données calculées par ledit dispositif portable et reçues en provenance dudit dispositif portable (6) lorsqu'il est déterminé que la vitesse de roue détectée par ledit capteur de vitesse de roue (3) est supérieure au seuil de vitesse de roue prédéterminé ;
dans lequel ledit dispositif de groupe d'instruments (5) est en outre configuré de manière à refuser une opération utilisateur qui demande audit dispositif de groupe d'instruments (5) de commuter l'affichage dudit dispositif de groupe d'instruments (5), de l'écran de navigation principal à l'écran de navigation auxiliaire, lorsque ledit dispositif de groupe d'instruments (5) détermine que la vitesse de roue détectée par ledit capteur de vitesse de roue (3) est supérieure au seuil de vitesse de roue prédéterminé ;
dans lequel ledit dispositif portable (6) est configuré de manière à commuter l'affichage dudit dispositif de groupe d'instruments (5), de l'écran de navigation principal à l'écran de navigation auxiliaire suite à la réception d'une opération utilisateur qui demande audit dispositif de groupe d'instruments (5) de commuter l'affichage du dispositif de groupe d'instruments (5), de l'écran de navigation principal à l'écran de navigation auxiliaire, lorsque ledit dispositif de groupe d'instruments (5) détermine que la vitesse de roue détectée par ledit capteur de vitesse de roue (3) n'est pas supérieure au seuil de vitesse de roue prédéterminé.

7. Système de navigation selon la revendication 6, **caractérisé en ce que** l'écran de navigation principal montre en outre, sur la carte montrée par celui-ci, un chemin de navigation vers une destination, et des informations de virage qui incluent une flèche de virage relative à une prochaine intersection pour tourner sur le chemin de navigation, et qui indiquent une distance entre le véhicule (1) et la prochaine intersection pour tourner.

8. Système de navigation selon la revendication 7, **caractérisé en ce que** l'écran de navigation principal montre le chemin de navigation dans une première couleur, et montre la flèche de virage sous la forme d'un motif statique et dans une seconde couleur qui est différente de la première couleur.

9. Système de navigation selon la revendication 7, **caractérisé en ce que** l'écran de navigation principal montre la flèche de virage sous une forme parmi une forme de flèche avec des couleurs dégradées et une forme de flèche clignotante.

10. Système de navigation selon la revendication 6, **caractérisé en outre par** :
un ensemble de boutons physiques (4) qui est couplé électriquement audit dispositif de groupe d'instruments (5) et qui est configuré de manière à être pressé par un utilisateur pour commuter l'affichage dudit dispositif de groupe d'instruments (5) entre l'écran de navigation principal et l'écran de navigation auxiliaire, lorsque ledit dispositif de groupe d'instruments (5) détermine que la vitesse de roue détectée par ledit capteur de vitesse de roue (3) n'est pas supérieure au seuil de vitesse de roue prédéterminé.

11. Système de navigation selon la revendication 10, **caractérisé en ce que** ledit dispositif de groupe d'instruments (5) est en outre configuré de manière à commuter l'affichage dudit dispositif de groupe d'instruments (5), de l'un parmi l'écran de navigation principal et l'écran de navigation auxiliaire à l'autre parmi l'écran de navigation principal et l'écran de navigation auxiliaire, en réponse à la réception d'une opération utilisateur qui demande audit dispositif de groupe d'instruments (5) de commuter l'affichage dudit dispositif de groupe d'instruments (5), dudit un écran parmi l'écran de navigation principal et l'écran de navigation auxiliaire à l'autre parmi l'écran de navigation principal et l'écran de navigation auxiliaire, lorsque ledit dispositif de groupe d'instruments (5) détermine que la vitesse de roue détectée par ledit capteur de vitesse de roue (3) est nulle.

12. Système de navigation selon la revendication 10, **caractérisé en ce que** ledit dispositif de groupe d'instruments (5) inclut un contrôleur de tableau de bord (53), et un ordinateur hôte (51) couplé audit contrôleur de tableau de bord (53) ;
dans lequel ledit capteur de vitesse de roue (3) est couplé électriquement audit contrôleur de tableau de bord (53) pour fournir la vitesse de roue détectée par celui-ci audit contrôleur de tableau de bord (53) ; et
dans lequel ledit ensemble de boutons physiques (4) est couplé électriquement audit contrôleur de tableau de bord (53) et audit ordinateur hôte (51) pour transmettre un signal correspondant à la pression exercée par l'utilisateur audit contrôleur de tableau de bord (53) et audit ordinateur hôte (51) .

13. Système de navigation selon la revendication 10, **caractérisé en ce que** ledit dispositif de groupe d'instruments (5) inclut un contrôleur de tableau de bord (53), et un ordinateur hôte (51) couplé audit contrôleur de tableau de bord (53) ;
dans lequel ledit capteur de vitesse de roue (3) est couplé électriquement audit contrôleur de tableau de bord (53) pour fournir la vitesse de roue détectée par celui-ci audit contrôleur de tableau de bord (53) ; et
dans lequel ledit ensemble de boutons physiques (4) est couplé électriquement audit ordinateur hôte (51) pour transmettre un signal correspondant à la pression exercée par l'utilisateur audit ordinateur hôte (51).

14. Système de navigation selon la revendication 10, **caractérisé en ce que** ledit dispositif de groupe d'instruments (5) inclut un contrôleur de tableau de bord (53), et un ordinateur hôte (51) couplé audit contrôleur de tableau de bord (53) ;
dans lequel ledit capteur de vitesse de roue (3) est couplé électriquement audit contrôleur de tableau de bord (53) pour fournir la vitesse de roue détectée par celui-ci audit contrôleur de tableau de bord (53) ; et
dans lequel ledit ensemble de boutons physiques (4) est couplé électriquement audit contrôleur de tableau de bord (53) pour transmettre un signal correspondant à la pression exercée par l'utilisateur audit contrôleur de tableau de bord (53) .

15. Système de navigation selon la revendication 10, **caractérisé en ce que** ledit dispositif de groupe d'instruments (5) inclut un ordinateur hôte (51), et ledit capteur de vitesse de roue (3) est couplé électriquement audit ordinateur hôte (51) pour fournir la vitesse de roue détectée par celui-ci audit ordinateur hôte (51) ; et
dans lequel ledit ensemble de boutons physiques (4) est couplé électriquement audit ordinateur hôte (51) pour transmettre un signal correspondant à la pression exercée par l'utilisateur audit ordinateur hôte (51).
